# EUROPÄISCHE PATENTSCHRIFT

(11) **EP 3 810 916 B1**
(45) Veröffentlichungstag und Bekanntmachung des Hinweises auf die Patenterteilung: **27.09.2023**
(21) Anmeldenummer: 19731713.4
(22) Anmeldetag: 17.06.2019
(51) Int. Cl.: F02D 41/10, F02D 41/14, F02D 41/22, F02M 26/50

(54) **VERFAHREN ZUR ERMITTLUNG UND/ODER ZUR ERKENNUNG EINER VERSOTTUNG EINER LUFT-ANSAUGSTRECKE ZU EINER BRENNKAMMER EINES VERBRENNUNGSMOTORS**
METHOD FOR DETERMINING AND/OR DETECTING AN ACCUMULATION OF SOOT IN AN AIR INTAKE TO A COMBUSTION CHAMBER OF AN INTERNAL COMBUSTION ENGINE
PROCÉDÉ POUR DÉTERMINER ET/OU POUR DÉTECTER UN ENCRASSEMENT D'UNE ZONE D'ASPIRATION D'AIR VERS UNE CHAMBRE DE COMBUSTION D'UN MOTEUR À COMBUSTION

(30) Priorität: 21.06.2018 DE 102018210099
(43) Veröffentlichungstag der Anmeldung: 28.04.2021
(73) Patentinhaber: Volkswagen AG, 38440 Wolfsburg (DE)
(72) Erfinder: BRAND, Michael, 38444 Wolfsburg (DE); ARENZ, Christian, 38110 Braunschweig (DE)
(86) Internationale Anmeldenummer: PCT/EP2019/065865
(87) Internationale Veröffentlichungsnummer: WO 2019/243248

(56) Entgegenhaltungen:
- EP-A2- 1 715 165
- DE-A1- 10 215 406
- DE-A1- 19 750 191
- DE-A1-102016 211 232
- DE-T2- 60 206 670
- US-A1- 2009 320 577

## Beschreibung

Die Erfindung betrifft ein Verfahren zur Ermittlung und/oder zur Erkennung einer Versottung einer Luft-Ansaugstrecke zu mindestens einer Brennkammer eines Verbrennungsmotors, insbesondere zur Ermittlung der Versottung der Luft-Ansaugstrecke zu mindestens einer Zylinderkammer des Verbrennungsmotors eines Kraftfahrzeuges, gemäß den Merkmalen des Oberbegriffes des Patentanspruches 1.

Im Rahmen des Antriebs von Kraftfahrzeugen werden Verbrennungsmotoren, insbesondere Otto-Motoren eingesetzt. Hierbei wird Luft über eine Luft-Ansaugstrecke mindestens einer Brennkammer, insbesondere einer Zylinderkammer des Verbrennungsmotors des Kraftfahrzeugs zugeführt. Insbesondere wird ein Einlassventil in dem entsprechenden Ansaugtakt geöffnet, wobei dann insbesondere - im Normalfall - eine bestimmte Luftmenge der Brennkammer zugeführt wird. Weiterhin wird der Brennkammer ein Kraftstoff zugeführt, wobei dann das in der Brennkammer vorhandene Luft- und Kraftstoffgemisch, insbesondere explosionsartig verbrannt bzw. gezündet wird, insbesondere um einen Zylinder zu bewegen / anzutreiben. Über ein Auslassventil wird das entstandene Abgasgemisch abgeführt. Derartige Verfahren zur Verbrennung des Luft- und Kraftstoffgemisches innerhalb einer Brennkammer eines Verbrennungsmotors werden insbesondere mit Hilfe einer sogenannten Lambdaregelung unter Einsatz einer Lambdasonde und eines Lambdareglers durchgeführt. Insbesondere ist auch ein Motorsteuergerät vorgesehen, das insbesondere ein entsprechend dem Motorsteuergerät abgespeichertes Füllungsmodell für die Brennkammer realisiert. Der Verbrennungsmotor kann mehrere Brennkammern bzw. Zylinderkammern, insbesondere vier, sechs oder acht Brennkammern aufweisen.

So ist im Stand der Technik, von dem die Erfindung ausgeht, aus der DE 10 2013 212 232 A1 ein Verfahren zur Erkennung eines defekten, nämlich eines versotteten Einlassventils bekannt, bei dem über einen Vergleich des Drehzahlverlaufs des Verbrennungsmotors mit dem zeitlichen Verlauf des Signals für den Lambdawert die Versottung eines Einlassventils erkannt wird. Ist nämlich dann das Einlassventil versottet, so wird eine größere Luftmenge als gewünscht während des Ansaugtaktes des Verbrennungsmotors in die Brennkammer, insbesondere in die Zylinderkammer während eines Drehzahlanstiegs des Verbrennungsmotors angesaugt, da das Einlassventil, weil es versottet ist, eben nicht zu 100% vollständig schließt. Damit steht für die gewünschte Verbrennung eine zu große Luftmenge zur Verfügung, so dass das Luft- und Kraftstoffgemisch schließlich auch nicht die gewünschten / optimierten Abgasanteile aufweist, so dass insbesondere die entsprechenden Lambdawerte dann größer als "1" sind. Aus den entsprechenden Signalen für die Lambdawerte bzw. den entsprechend berechneten Lambdawerten (> "1") schließt das Motorsteuergerät dann auf ein nicht einwandfrei arbeitendes Einlassventil, nämlich auf die Versottung des Einlassventils. DE 10 2016 211232 A1 sowie US 2009/320577

A1 offenbaren ebenfalls die Detektion einer Versottung im Einlasstrakt sowie entsprechende Maßnahmen zur Kompensation.

Über den Betrieb bzw. die Laufzeit eines Verbrennungsmotors können aber auch die Luft-Ansaugstrecken zu den jeweiligen Brennkammern bzw. zu den Zylinderkammern, also insbesondere auch die entsprechenden Einlasskanäle und nicht nur die Einlassventile versotten. Damit strömt dann weniger Luft in den Brennraum während des Ansaugtaktes des Verbrennungsmotors, als bei einer unversotteten Luft-Ansaugstrecke. Der in der Brennkammer realisierten Verbrennung steht dann zur Verbrennung weniger Luft zur Verfügung als gewünscht bzw. als das im Motorsteuergerät hinterlegte Füllungsmodell aufgrund der dort abgelegten Daten erfasst bzw. moduliert. Dies führt insbesondere zu einer (dann relativ) erhöhten Zuführung von Kraftstoff in die Brennkammer, wobei es aufgrund der dann weniger zur Verfügung stehenden Luftmenge nicht zu einer vollständigen Verbrennung des Kraftstoffes kommt. In der Brennkammer liegt ein sogenanntes "fettes Gemisch" vor. Die Leistung des Motors reduziert sich.

In der Praxis versucht man dem durch den Einsatz von sogenannten Heißfilmluftmassenmessern (HFM) entgegen zu wirken, mit deren Hilfe die tatsächlich einströmende Luftmenge gemessen wird. Hierdurch wird auch dann bei einer versotteten Luft-Ansaugstrecke im Rahmen der jeweiligen Messgenauigkeit des jeweiligen HFM's die tatsächliche Füllung ermittelt. Allerdings sind sogenannte HFM's zusätzliche Bauteile, müssen also entsprechend angeordnet und auch montiert werden und erhöhen auch die Herstellungskosten des Verbrennungsmotors. Auch ist durchaus möglich, dass derartige sogenannte HFM's über deren entsprechende Lebensdauer ausfallen können und/oder dass deren Messgenauigkeit sich entsprechend verringert.

Oft haben sich in der Praxis die zuvor genannten HFM's grundsätzlich zwar durchgesetzt, aber es gibt zur Füllungserfassung und/oder für die Füllungsrealisierung, für die der Brennkammer zugeführte Luftmenge auch sogenannte "P-Systeme" (Drucksysteme), bei denen u.a. aufgrund des Druckes im Saugrohr die Füllung für die Brennkammer, also die insbesondere der Zylinderkammer zugeführte Luftmenge bestimmt wird. Bei derartigen sogenannten P-Systemen ist bisher die Ermittlung und/oder die Erkennung einer Versottung einer Luft-Ansaugstrecke nicht möglich bzw. wird teilweise über separate zusätzliche Messsysteme, beispielsweise auch durch zusätzlich vorgesehene HFM's, dann sehr kostenintensiv.

Der Erfindung liegt daher die Aufgabe zugrunde, ein Verfahren zur Ermittlung und/oder einer Erkennung einer Versottung einer Luft-Ansaugstrecke zu einer Brennkammer eines Verbrennungsmotors anzugeben, das die eingangs genannten Nachteile vermeidet, insbesondere aber kostengünstig realisierbar ist.

Die zuvor aufgezeigte Aufgabe ist nun zunächst durch die Merkmale des Patentanspruches 1 gelöst.

Wenn die Luft über eine Luft-Ansaugstrecke der Brennkammer bzw. den Brennkammern des Verbrennungsmotors zugeführt wird und der Brennkammer bzw. den Brennkammern ein Kraftstoff zugeführt wird, wird das in der Brennkammer dann vorhandene Luft- und Kraftstoffgemisch insbesondere explosionsartig verbrannt, wobei die Abgase und deren Anteile näher untersucht werden bzw. dann eine sogenannte Lambdaregelung durchführt wird.

Mit Hilfe dieser bei einem Verbrennungsverfahren üblicherweise bereits existierenden Lambdaregelung wird nun auch eine zumindest teilweise Versottung der Luft-Ansaugstrecke ermittelt und/oder erkannt, nämlich mit Hilfe einer Auswertung von mehreren Lambdareglerwerten.

Es sind nun keine zusätzlichen Bauteile, wie beispielsweise die bisherigen im Stand der Technik anzuordnenden HFM's mehr notwendig, wodurch sich die Herstellungs- und Montagekosten für den Verbrennungsmotor verringern. Zudem, da nun weniger Bauteile notwendig sind, ist auch eine damit verbundene Fehlerhäufigkeit / Fehleranfälligkeit verringert, wobei aber eine entsprechende Messgenauigkeit mit Hilfe der entsprechenden ermittelten Lambdareglerwerte zusätzlich gegeben bzw. realisiert ist. Auch ist das Verfahren insbesondere bei den sogenannten "P-Systemen" anwendbar.

Die Lambdareglerwerte werden in einer bestimmten Phase eines Drehzahlverlaufs des Verbrennungsmotors und/oder für bestimmte Drehzahlen und/oder für bestimmte Drehzahlbereiche ermittelt. Insbesondere können die Lambdareglerwerte in der Phase einer Drehzahlerhöhung der Drehzahl des Verbrennungsmotors und/oder für bestimmte Drehzahlbereiche des Verbrennungsmotors ermittelt werden. Hierbei werden insbesondere mehrere Lambdareglerwerte in einem bestimmten Zeitintervall oder in mehreren bestimmten Zeitintervallen ermittelt.

Für den Fall, dass die ermittelten Lambdareglerwerte, insbesondere alle in einer bestimmten Phase ermittelten Lambdareglerwerte, kleiner als "1" sind, bedeutet dies im Wesentlichen, dass das Verhältnis von "Luft / Kraftstoff" in diesem Augenblick / Zeitpunkt in der Brennkammer kleiner als "1" ist, dass also im Wesentlichen eine geringere Luftmenge über die Luft-Ansaugstrecke zu der Brennkammer angesaugt wird, als dies gemäß dem abgespeicherten Füllungsmodell erwünscht ist. Hieraus wird auf eine zumindest teilweise Versottung der Luft-Ansaugstrecke zu der Brennkammer bzw. zu den Brennkammern des Verbrennungsmotors geschlossen. Das Verfahren basiert im Wesentlichen insbesondere auf folgendem technischen Zusammenhang:
Bei einem optimalen Verhältnis von "Luft / Kraftstoff", also bei einem optimalen Luft- und Kraftstoffgemisch ermittelt die Lambdasonde im Wesentlichen Lambdawerte von "1" bzw. von nahezu "1". Für den Fall, dass nun die Luft-Ansaugstrecke zu der Brennkammer versottet ist, wird nun im Ansaugtakt zu wenig Luft, also eine zu geringe Luftmenge angesaugt. In der Brennkammer liegt ein sogenanntes "fettes Gemisch" vor, die von der Lambdasonde ermittelten Lambdawerte sind daher kleiner als "1" (λ < "1"). Da eine Lambdaregelung realisiert ist, wird nun mit Hilfe des Lambdareglers und der nun einzustellenden Lambdareglerwerte (Rλ) versucht, wieder ein optimales Luft- und Kraftstoffgemisch zu realisieren. Aus diesem Grunde werden bei Lambdawerten kleiner als "1" (λ < "1") dann die Lambdareglerwerte (Rλ) "quasi" den Lambdawerten nachgeführt. Die Lambdareglerwerte bilden den entsprechenden Faktor der die Kraftstoffeinspritzung in die Brennkammer korrigieren soll. Liegt also in der Brennkammer aufgrund der zu wenig zugeführten Luftmenge ein zu "fettes" Luft- und Kraftstoffgemisch vor (λ < "1") wird mit Hilfe von sich einstellenden Lambdareglerwerten (RA < "1") dann die Kraftstoffmenge, die im nächsten Ansaugtakt eingespritzt wird, entsprechend verringert, nämlich mit einem Lambdareglerwert kleiner als "1". Mit Hilfe einer Auswertung von mehreren Lambdareglerwerten (Rλ) kann daher die Versottung einer Luft-Ansaugstrecke zu der Brennkammer, insbesondere zu der Zylinderkammer eines Verbrennungsmotors erkannt und/oder ermittelt werden, weil bei einer vorliegenden Versottung mit Hilfe des Lambdareglers bzw. der Lambdaregelung dann versucht wird, die Kraftstoffmenge, die eingespritzt wird, zu verringern, insbesondere der aufgrund der Versottung nur geringer angesaugten Luftmenge anzupassen. Einfach ausgedrückt: Werden mehrere Lambdareglerwerte kleiner als "1" ermittelt, insbesondere sequentiell aufeinanderfolgend kann auf eine Versottung der Luft-Ansaugstrecke rückgeschlossen werden.

Insbesondere wird eine Vielzahl von Lambdareglerwerten während einer Drehzahlerhöhung des Verbrennungsmotors ermittelt und es wird dann aufgrund der Lambdareglerwerte eine Ausgleichskurve berechnet und/oder ermittelt. Für den Fall, dass die Ausgleichskurve eine negative Steigung aufweist, was der Fall ist, wenn die Lambdareglerwerte kleiner als "1" sind, wird hieraus auf eine Versottung der Luft-Ansaugstrecke geschlossen bzw. wird hierdurch eine Versottung der Luft-Ansaugstrecke ermittelt bzw. erkannt. Insbesondere wird eine Ausgleichsgerade bestimmt oder ermittelt. Insbesondere wird für den Fall, dass die Ausgleichskurve, insbesondere dieAusgleichsgerade eine negative Steigung aufweist, eine Versottung der Luft-Ansaugstrecke festgestellt. Die Ermittlung der Vielzahl von Lambdareglerwerten muss aber nicht unbedingt während einer Drehzahlerhöhung des Verbrennungsmotors realisiert werden. Denkbar ist, wie bereits oben erwähnt, dass die Lambdareglerwerte in einer bestimmten Phase eines Drehzahlverlaufs des Verbrennungsmotors und/oder für bestimmte Drehzahlen und/oder für bestimmte Drehzahlbereiche ermittelt werden, hier gibt es unterschiedliche Realisierungsmöglichkeiten.

Diese Prozedur / Verfahrensschritte werden insbesondere im Motorsteuergerät durchgeführt bzw. aufgrund der dem Motorsteuergerät übermittelten Signale und/oder dort berechneten Werte entsprechend realisiert.

Für den Fall, dass eine Versottung der Luft-Ansaugstrecke zu einer Brennkammer oder zu den Brennkammern ermittelt worden ist, wird insbesondere auch dann ein Maß für diese Versottung ermittelt, insbesondere aufgrund des ermittelten negativen Steigungswertes der Ausgleichskurve, insbesondere der Ausgleichsgeraden. Je größer der Betrag des negativen Steigungswertes der Ausgleichskurve, insbesondere der Ausgleichsgeraden, je größer ist die Versottung der Luft-Ansaugstrecke.

Bei der erfindungsgemäßen Ausführungsform des Verfahrens wird mindestens ein Korrekturwert ermittelt, mit Hilfe dessen dann ein im Motorsteuergerät gespeichertes Füllungsmodell, insbesondere die Füllungserfassung und/oder die Füllungssteuerung adaptiert und/oder aktuell stetig angepasst wird.

In einer weiteren bevorzugten Ausführungsform des Verfahrens werden mehrere Lambdareglerwerte insbesondere in einem bestimmten Zeitintervall oder in mehreren bestimmten Zeitintervallen ermittelt. Hierauf basierend kann dann mindestens ein Korrekturwert, insbesondere können aber mehrere Korrekturwerte, jeweils drehzahlabhängig ermittelt werden. Mit Hilfe dieser Korrekturwerte kann das im Motorsteuergerät abgespeicherte Füllungsmodell adaptiert werden, insbesondere stetig adaptiert und/oder angepasst werden. Derartige Lambdareglerwerte können zwar für eine bestimmte Phase, insbesondere für eine Drehzahlerhöhung des Verbrennungsmotors, und/oder für bestimmte Drehzahlen (Betriebspunkte) und/oder für bestimmte Drehzahlbereiche ermittelt und ausgewertet werden. Eine feine Justierung / Adaptierung des im Motorsteuergerätes abgespeicherten Füllungsmodelles ist daher insbesondere auch mit Hilfe von drehzahlabhängig ermittelten Korrekturwerten realisierbar.

Insbesondere wird bei dem im Motorsteuergerät abgespeicherten Füllungsmodell die Füllungserfassung mit Hilfe der Korrekturwerte korrigiert bzw. adaptiert. Die Leistung des Verbrennungsmotors wird optimal gesteuert, insbesondere wird die aufgrund der anfänglich zu geringen Luftmenge reduzierte Leistung des Verbrennungsmotors wieder entsprechend erhöht bzw. durch das erfindungsgemäße Verfahren entsprechend dann ausgeglichen.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden wird nun eine bevorzugte Ausführungsform des Verfahrens anhand der Zeichnung und der dazugehörigen Beschreibung näher erläutert werden. In der Zeichnung zeigt:

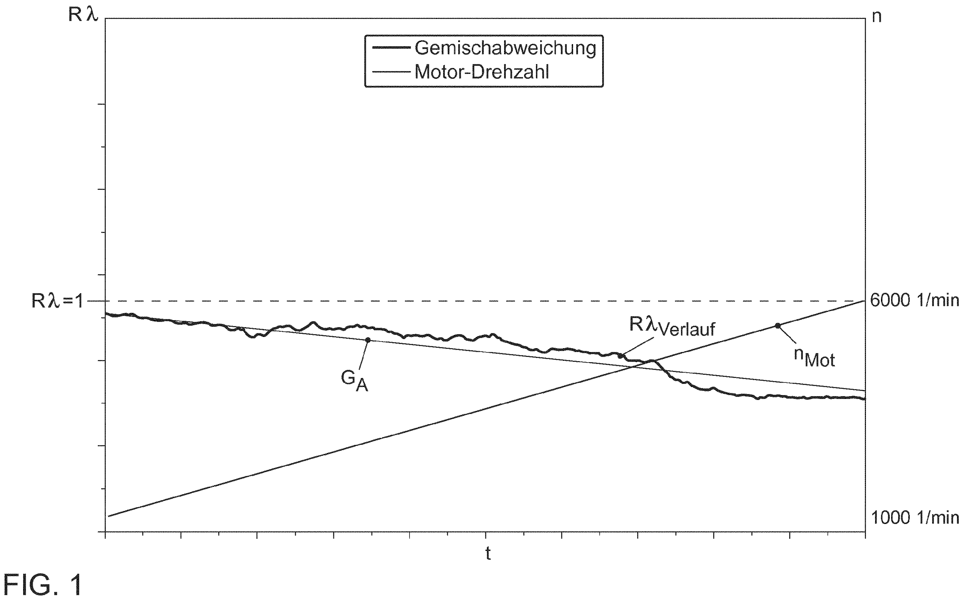

- Fig. 1: in schematischer Darstellung den Drehzahlverlauf n_{Mot} eines Verbrennungsmotors über der Zeit t während einer Drehzahlerhöhung bzw. über die Zeit t den Verlauf Rλ_{Verlauf} von Lambdareglerwerten (bzw. die hierdurch dargestellte Gemischabweichung) sowie die Ermittlung / Darstellung einer entsprechenden Ausgleichskurve, hier insbesondere einer Ausgleichsgeraden G_{A} bei der Versottung einer Luft-Ansaugstrecke, sowie

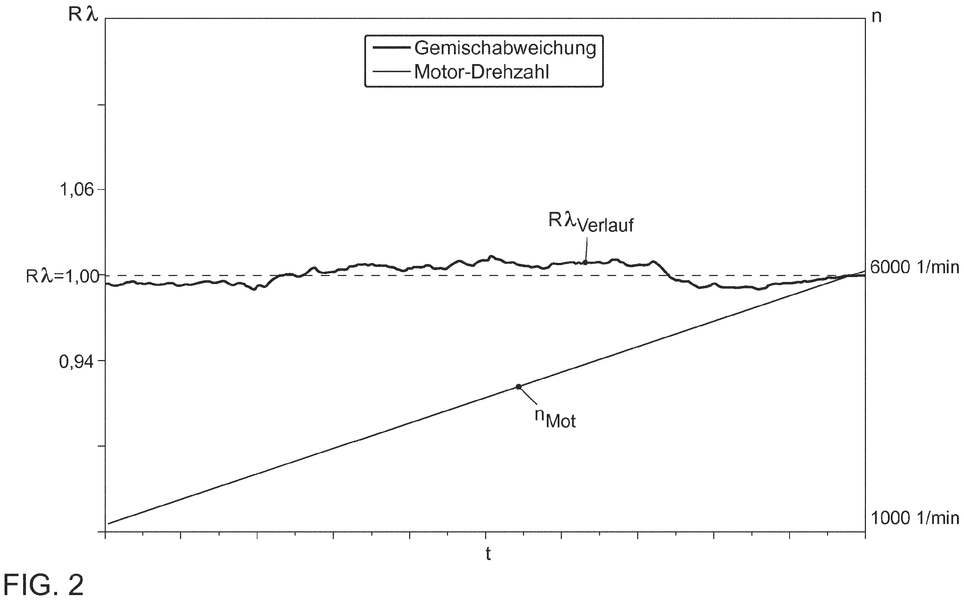

- Fig. 2: in schematischer Darstellung den Drehzahlverlauf n_{Mot} eines Verbrennungsmotors über die Zeit t während einer Drehzahlerhöhung bzw. über die Zeit t den Verlauf Rλ_{Verlauf} von Lambdareglerwerten nach der Durchführung des erfindungsgemäßen Verfahrens bzw. nach der Ermittlung und/oder Erkennung der Versottung der Luft-Ansaugstrecke bzw. nach erfolgter Adaption des im Motorsteuergerät abgespeicherten Füllungmodelles.

Die Fig. 1 und 2 sollen nun das Verfahren zur Ermittlung und/oder zur Erkennung einer Versottung einer Luft-Ansaugstrecke zu mindestens einer Brennkammer eines Verbrennungsmotors verdeutlichen, insbesondere zur Ermittlung der Versottung der Luft-Ansaugstrecke zu mindestens einer Zylinderkammer des Verbrennungsmotors eines Kraftfahrzeugs, insbesondere eines Ottomotors. Aber auch bei anderen Verbrennungsmotoren, teils bei Dieselmotoren, ist die Anwendung dieses Verfahrens denkbar bzw. möglich.

Die Luft wird über eine Luft-Ansaugstrecke der Brennkammer des Verbrennungsmotors und/oder den Brennkammern zugeführt. Hierbei kann der Verbrennungsmotor mehrere Brennkammern, insbesondere vier Brennkammern, sechs Brennkammern oder sogar eine weitere Vielzahl von Brennkammern aufweisen. In der jeweiligen Brennkammer wird auch ein Kraftstoff bzw. eine jeweilige Kraftstoffmenge zugeführt. Ist der sogenannte Ansaugtakt des Verbrennungsmotors abgeschlossen, wird in der Brennkammer dann das vorhandene Luft- und Kraftstoffgemisch explosionsartig verbrannt.

Bei Verbrennungsmotoren von Kraftfahrzeugen ist insbesondere mit Hilfe einer Lambdasonde eine Lambdaregelung vorgesehen bzw. vorhanden, wodurch einerseits das Abgasgemisch näher untersucht bzw. die entsprechenden Anteile des Abgasgemisches ermittelt werden können, insbesondere die entsprechenden Signale der Lambdasonde dann dem Motorsteuergerät zugeführt werden. Dem Motorsteuergerät liegen daher die entsprechenden Signale / Werte der Lambdasonde vor bzw. werden die entsprechenden Lambdawerte innerhalb des Motorsteuergerätes berechnet. Im Motorsteuergerät liegen aber nicht nur die Lambdawerte vor, sondern aufgrund der Lambdaregelung auch die entsprechenden Lambdareglerwerte bzw. werden diese für die Lambdaregelung ermittelt und/oder berechnet.

Zumindest wird eine teilweise Versottung der Luft-Ansaugstrecke mit Hilfe einer Auswertung von Lambdareglerwerten Rλ ermittelt und/oder erkannt. Dies erfolgt insbesondere mit Hilfe des Motorsteuergerätes.

Fig. 1 zeigt nun über die Zeit t eine Drehzahlerhöhung des Verbrennungsmotors, die hier insbesondere bzw. hier beispielhaft linear erfolgt, Fig. 1 zeigt also hier den Verlauf für die Drehzahl n_{Mot} des Verbrennungsmotors bei einer Drehzahlerhöhung.

Das erfindungsgemäße Verfahren wird insbesondere anhand der hier dargestellten Fig. 1 und 2 erläutert, insbesondere am Beispiel der Drehzahlerhöhung der Drehzahl n_{Mot} eines Verbrennungsmotors. Denkbar ist auch, was hier aber nicht dargestellt ist, dass die Lambdareglerwerte nicht in der bestimmten Phase einer Drehzahlerhöhung, sondern in einer anderen bestimmten Phase eines Drehzahlverlaufs des Verbrennungsmotors und/oder für bestimmte Drehzahlen und/oder für bestimmte Drehzahlbereiche ermittelt werden. Insbesondere werden aber mehrere Lambdareglerwerte Rλ in einem bestimmten Zeitintervall oder in mehreren bestimmten Zeitintervallen ermittelt. Dies ist abhängig von der spezifischen Ausführungsform des erfindungsgemäßen Verfahrens, das hier nun anhand der Fig. 1 und 2 nochmals insbesondere für die bestimmte Phase einer Drehzahlerhöhung des Verbrennungsmotors erläutert werden darf:
In einer bestimmten Phase, nämlich in der Phase dieser, hier in Fig. 1 dargestellten Drehzahlerhöhung der Drehzahl n_{Mot} des Verbrennungsmotors, werden nun mehrere Lambdareglerwerte Rλ ermittelt und/oder ausgewertet, insbesondere werden die jeweiligen Lambdareglerwerte Rλ permanent während der Drehzahlerhöhung ermittelt. Für den Fall, dass die ermittelten Lambdareglerwerte Rλ, insbesondere sequentiell hintereinander ermittelte Lambdareglerwerte Rλ kleiner als "1" sind (Rλ < 1), bedeutet dies, dass - wie in Fig. 1 dargestellt - der Verlauf Rλ_{Verlauf} (des Abgasgemisches) über den zeitlichen Verlauf der Drehzahlerhöhung der Drehzahl n_{Mot} des Verbrennungsmotors bzw. über die Zeit t fällt. Bei einer optimalen Verbrennung wären die entsprechenden Lambdareglerwerte Rλ im Wesentlichen = "1" (Rλ = 1). Letzteres ist in Fig. 2 dargestellt, die den Verlauf Rλ_{Verlauf} der Lambdareglerwerte nach der Korrektur des Füllungsmodells bzw. nach der Korrektur der Versottung durch das Füllungsmodell darstellen soll. Hier ist erkennbar, dass die Lambdareglerwerte Rλ leicht um den Wert "1" schwanken, aber im Wesentlichen eben nicht stetig fallen, wie in Fig. 1 dargestellt. Mit dem Ausdruck "im Wesentlichen = 1" ist also auch das in Fig. 2 dargestellte "Schwanken" der Lambdareglerwerte um den Wert "1" mit umfasst, insbesondere im Bereich von 0,97 bis 1,03.

Hier für den in der Fig. 1 dargestellten Fall des Verlaufes Rλ_{Verlauf}, also der dortigen Lambdareglerwerte Rλ kleiner als "1" bedeutet dies, dass hierbei die Luftmenge in der Brennkammer des Verbrennungsmotors größer ist als die gewünschte Luftmenge. Weil die Lambdareglerwerte Rλ direkt auf die Kraftstoffeinspritzmenge als Faktor wirken und kleiner als "1" sind, und hierdurch versucht wird, die Kraftstoffmenge zu reduzieren, damit die Lambdawerte / Lambdareglerwerte wieder den gewünschten Wert "1" einnehmen bzw. dann auch die Lambdareglerwerte Rλ nach der Korrektur des Füllungsmodelles wieder im Wesentlichen um den Wert "1" schwanken, so wie in Fig. 2 dargestellt. Aus Fig. 1 ist daher erkennbar, dass die Lambdareglerwerte Rλ in der Phase einer Drehzahlerhöhung der Drehzahl n_{Mot} des Verbrennungsmotors sequentiell hintereinander ermittelt und ausgewertet werden, wobei, so wie in Fig. 1 dargestellt, hier mehrere Lambdareglerwerte Rλ ermittelt werden, die alle kleiner als "1" sind, insbesondere über die Zeit t sich weiter verringern. Wie bereits oben erläutert, kann dies nicht nur für eine Drehzahlerhöhung der Drehzahl des Verbrennungsmotors durchgeführt werden, sondern mehrere Lambdareglerwerte können für bestimmte Drehzahlbereiche und/oder für bestimmte Drehzahlen (Drehzahlpunkte) ermittelt und ausgewertet werden, um das Füllungsmodell entsprechend zu korrigieren, nachdem mit Hilfe der Auswertung der Lambdareglerwerte die Versottung festgestellt worden ist.

Insbesondere werden gemäß Fig. 1 bzw. Fig. 2 während der Drehzahlerhöhung der Drehzahl n_{Mot} des Verbrennungsmotors dann eine Vielzahl von Lambdareglerwerten Rλ ermittelt, wobei dann aufgrund der Lambdareglerwerte Rλ eine Ausgleichskurve, insbesondere eine Ausgleichsgerade G_{A} berechnet und/oder ermittelt wird, wie in Fig. 1 dargestellt. Die Ausgleichsgerade G_{A} ist hier in Fig. 1 entsprechend dargestellt und im Wesentlichen aufgrund der ermittelten Lambdareglerwerte Rλ insbesondere entsprechend "interpoliert". Es kann auch eine Ausgleichskurve anstelle einer Ausgleichsgeraden berechnet werden.

Gut ersichtlich in Fig. 1 ist, dass hier die Ausgleichskurve, insbesondere die Ausgleichsgerade G_{A} eine negative Steigung, also eine Steigung kleiner als "0" aufweist. Hieraus kann dann auf eine Versottung der Luft-Ansaugstrecke rückgeschlossen werden.

Es kann nun für den Fall, dass eine Versottung ermittelt worden ist, auch ein Maß für diese Versottung insbesondere aufgrund des ermittelten negativen Steigungswertes der Ausgleichskurve, insbesondere der Ausgleichsgeraden G_{A} ermittelt werden. Insbesondere entspricht der Betrag des negativen Steigungswertes der Ausgleichskurve, insbesondere der Ausgleichsgeraden dem Maß der Versottung, d.h. je größer die Versottung, je größer ist der Betrag der negativen Steigung der Ausgleichsgerade G_{A}.

In der erfindungsgemäßen Ausführungsform des Verfahrens wird mindestens ein Korrekturwert ermittelt, mit dessen Hilfe ein im Motorsteuergerät gespeichertes Füllungsmodell, insbesondere die Füllungserfassung und/oder die Füllungssteuerung adaptiert wird.

In der ganz besonders bevorzugten weiteren Ausführungsform des erfindungsgemäßen Verfahrens werden aber mehrere Lambdareglerwerte in einem bestimmten Zeitintervall oder in mehreren bestimmten Zeitintervallen für bestimmte Drehzahlbereiche des Verbrennungsmotors ermittelt. Hierdurch können insbesondere mehrere Korrekturwerte jeweils drehzahlabhängig ermittelt werden, so dass für unterschiedliche Drehzahlen / Drehzahländerungen des Verbrennungsmotors das Füllungsmodell adaptiert werden kann.

Insbesondere können mehrere Korrekturwerte, insbesondere daher jeweils drehzahlabhängig ermittelt werden. Mit Hilfe der Korrekturwerte kann das Füllungsmodell korrigiert, insbesondere stetig adaptiert werden. Insbesondere erfolgt die Ermittlung der Korrekturwerte und/oder die Adaption des Füllungsmodelles stetig, insbesondere daher bei jeder Drehzahlerhöhung und/oder für bestimmte Drehzahlen und/oder für bestimmte Drehzahlbereiche.

Durch das erfindungsgemäße Verfahren sind die eingangs genannten Nachteile verringert, insbesondere ist die kostengünstige Herstellung eines Verbrennungsmotors ohne weitere zusätzliche Bauteile ermöglicht, da das erfindungsgemäße Verfahren bereits mit dem bei einem Verbrennungsmotor bestehenden Komponenten steuerungs- und/oder regelungstechnisch kostengünstig realisiert werden kann.

### BEZUGSZEICHENLISTE

- n_{Mot}: Drehzahl des Verbrennungsmotors
- t: Zeit
- G_{A}: Ausgleichskurve, insbesondere Ausgleichsgerade
- Rλ: Lambdareglerwerte
- Rλ_{Verlauf}: Verlauf der Lambdareglerwerte
- n: Drehzahlen

## Patentansprüche

1. Verfahren zur Ermittlung und/oder zur Erkennung einer Versottung einer Luft-Ansaugstrecke zu mindestens einer Brennkammer eines Verbrennungsmotors, insbesondere zur Ermittlung der Versottung der Luft-Ansaugstrecke zu mindestens einer Zylinderkammer des Verbrennungsmotors eines Kraftfahrzeuges, wobei Luft über eine Luft-Ansaugstrecke der Brennkammer des Verbrennungsmotors zugeführt wird, wobei der Brennkammer ein Kraftstoff zugeführt wird, wobei das in der Brennkammer dann vorhandene Luft- und Kraftstoffgemisch verbrannt wird und wobei mit Hilfe einer Lambdasonde und eines Lambdareglers eine Lambdaregelung durchgeführt wird, **dadurch gekennzeichnet, dass** zumindest eine teilweise Versottung der Luft-Ansaugstrecke mit Hilfe einer Auswertung von mehreren Lambdareglerwerten (Rλ) ermittelt und/oder erkannt wird, dass eine Vielzahl von Lambdareglerwerten (Rλ) kleiner als "1" ermittelt wird und dann basierend auf diesen Lambdareglerwerten (Rλ) eine Ausgleichskurve berechnet und/oder ermittelt wird, dass für den Fall, dass die Ausgleichskurve eine negative Steigung aufweist, eine Versottung der Luft-Ansaugstrecke festgestellt wird, dass für den Fall, dass eine Versottung ermittelt worden ist, mindestens ein Korrekturwert ermittelt wird, mit Hilfe dessen ein im Motorsteuergerät gespeichertes Füllungsmodell adaptiert wird.

2. Verfahren nach Anspruch 1, **dadurch gekennzeichnet, dass** die Lambdareglerwerte (Rλ) in einer bestimmten Phase eines Drehzahlverlaufs des Verbrennungsmotors (n_{Mot}) und/oder für bestimmte Drehzahlen und/oder für bestimmte Drehzahlbereiche ermittelt werden.

3. Verfahren nach einem der Ansprüche 1 oder 2, **dadurch gekennzeichnet, dass** die Lambdareglerwerte (Rλ) in der Phase einer Drehzahlerhöhung der Drehzahl (n_{Mot}) des Verbrennungsmotors und/oder für bestimmte Drehzahlbereiche des Verbrennungsmotors ermittelt werden, insbesondere, dass mehrere Lambdareglerwerte (Rλ) in einem bestimmten Zeitintervall oder in mehreren bestimmten Zeitintervallen ermittelt werden.

4. Verfahren nach einem der Ansprüche 1 bis 3, **dadurch gekennzeichnet, dass** bei dem Füllungsmodell die Füllungserfassung und/oder die Füllungssteuerung adaptiert wird.

5. Verfahren nach einem der vorstehenden Ansprüche, **dadurch gekennzeichnet, dass** eine Ausgleichsgerade (G_{A}) berechnet und/oder ermittelt wird.

6. Verfahren nach einem der vorstehenden Ansprüche, **dadurch gekennzeichnet, dass** für den Fall, dass eine Versottung ermittelt worden ist, ein Maß der Versottung, insbesondere aufgrund des ermittelten negativen Steigungswertes der Ausgleichskurve, insbesondere der Ausgleichsgeraden (G_{A}), ermittelt wird.

7. Verfahren nach einem der vorstehenden Ansprüche, **dadurch gekennzeichnet, dass** ein Korrekturwert oder mehrere Korrekturwerte, insbesondere jeweils drehzahlabhängig ermittelt wird bzw. werden.

8. Verfahren nach einem der vorstehenden Ansprüche, **dadurch gekennzeichnet, dass** die Ermittlung der Korrekturwerte und/oder die Adaption des Füllungsmodelles stetig, insbesondere bei jeder Drehzahlerhöhung und/oder für bestimmte Drehzahlen und/oder für bestimmte Drehzahlbereiche erfolgt.

## Claims

1. Method for determining and/or detecting sooting in an air intake to at least one combustion chamber of an internal combustion engine, in particular for determining the sooting in the air intake to at least one cylinder chamber of the internal combustion engine of a motor vehicle, wherein air is supplied via an air intake to the combustion chamber of the internal combustion engine, wherein a fuel is supplied to the combustion chamber, wherein the air and fuel mixture then present in the combustion chamber is combusted and wherein lambda control is carried out by means of a lambda sensor and a lambda controller,
**characterized in that** at least partial sooting of the air intake is determined and/or detected by means of an evaluation of a plurality of lambda controller values (Rλ), **in that** a multiplicity of lambda controller values (Rλ) smaller than "1" is determined and then a compensation curve is calculated and/or determined on the basis of these lambda controller values (Rλ), **in that**, if the compensation curve has a negative gradient, sooting of the air intake is determined, and **in that**, if sooting has been determined, at least one correction value is determined by means of which a filling model stored in the engine control unit is adapted.

2. Method according to claim 1, **characterized in that** the lambda controller values (Rλ) are determined in a specific phase of a speed profile of the internal combustion engine (n_{Mot}) and/or for specific speeds and/or for specific speed ranges.

3. Method according to either claim 1 or claim 2, **characterized in that** the lambda controller values (Rλ) are determined in the phase of a speed increase of the speed (n_{Mot}) of the internal combustion engine and/or for specific speed ranges of the internal combustion engine, in particular **in that** a plurality of lambda controller values (Rλ) are determined in a specific time interval or in multiple specific time intervals.

4. Method according to any of claims 1 to 3, **characterized in that** the filling detection and/or the filling control is adapted in the filling model.

5. Method according to any of the preceding claims, **characterized in that** a compensation line (G_{A}) is calculated and/or determined.

6. Method according to any of the preceding claims, **characterized in that,** if sooting has been determined, a measure of the sooting is determined, in particular on the basis of the determined negative gradient value of the compensation curve, in particular the compensation line (G_{A}).

7. Method according to any of the preceding claims, **characterized in that** a correction value or a plurality of correction values is determined, in particular in each case on the basis of the speed.

8. Method according to any of the preceding claims, **characterized in that** the determination of the correction values and/or the adaptation of the filling model is carried out continuously, in particular at each speed increase and/or for specific speeds and/or for specific speed ranges.

## Revendications

1. Procédé pour déterminer et/ou détecter un encrassement d'une zone d'aspiration d'air vers au moins une chambre de combustion d'un moteur à combustion, en particulier pour déterminer l'encrassement de la zone d'aspiration d'air vers au moins une chambre de cylindre du moteur à combustion d'un véhicule automobile, dans lequel l'air est introduit par l'intermédiaire d'une zone d'aspiration d'air de la chambre de combustion du moteur à combustion, dans lequel la chambre de combustion est alimentée en carburant, dans lequel le mélange d'air et de carburant alors présent dans la chambre de combustion est brûlé et une sonde lambda et un régulateur lambda permettent de réaliser une régulation lambda, **caractérisé en ce qu'**au moins un encrassement partiel de la zone d'aspiration d'air est déterminé et/ou détecté à l'aide d'une évaluation de plusieurs valeurs de régulateur lambda (Rλ), qu'une pluralité de valeurs de régulateur lambda (Rλ) est déterminée inférieure à « 1 », puis, sur la base de ces valeurs de régulateur lambda (Rλ), une courbe de compensation est calculée et/ou déterminée, que dans le cas où la courbe de compensation présente une pente négative, un encrassement de la zone d'aspiration d'air est constaté, que dans le cas où un encrassement a été déterminé, au moins une valeur de correction est déterminée, à l'aide de laquelle un modèle de remplissage mémorisé dans l'appareil de commande du moteur est adapté.

2. Procédé selon la revendication 1, **caractérisé en ce que** les valeurs de régulateur lambda (Rλ) sont déterminées dans une phase définie d'une courbe de vitesse du moteur à combustion (n_{Mot}) et/ou pour des vitesses définies et/ou pour des plages de vitesse définies.

3. Procédé selon l'une des revendications 1 ou 2, **caractérisé en ce que** les valeurs de régulateur lambda (Rλ) sont déterminées dans la phase d'une augmentation de vitesse de la vitesse (n_{Mot}) du moteur à combustion et/ou pour des plages de vitesse définies du moteur à combustion, en particulier que plusieurs valeurs de régulateur lambda (Rλ) sont déterminées dans un intervalle temporel défini ou dans plusieurs intervalles temporels définis.

4. Procédé selon l'une des revendications 1 à 3, **caractérisé en ce que** pour le modèle de remplissage, la détection de remplissage et/ou la commande de remplissage sont adaptées.

5. Procédé selon l'une quelconque des revendications précédentes, **caractérisé en ce qu'**une droite de compensation (G_{A}) est calculée et/ou déterminée.

6. Procédé selon l'une quelconque des revendications précédentes, **caractérisé en ce que** dans le cas où un encrassement a été déterminé, une mesure de l'encrassement, en particulier sur la base de la valeur de pente négative déterminée de la courbe de compensation, en particulier de la droite de compensation (G_{A}), est déterminée.

7. Procédé selon l'une quelconque des revendications précédentes, **caractérisé en ce qu'**une valeur de correction ou plusieurs valeurs de correction est ou sont déterminée(s), en particulier respectivement en fonction de la vitesse de rotation.

8. Procédé selon l'une quelconque des revendications précédentes, **caractérisé en ce que** la détermination des valeurs de correction et/ou l'adaptation du modèle de remplissage est/sont effectué(s) en permanence, en particulier pour chaque augmentation de vitesse et/ou pour des vitesses définies et/ou pour des plages de vitesse définies.
